# FASCICULE DE BREVET EUROPEEN

(11) **EP 3 809 388 B1**
(45) Date de publication et mention de la délivrance du brevet: **16.11.2022**
(21) Numéro de dépôt: 20199473.8
(22) Date de dépôt: 30.09.2020
(51) Int. Cl.: G08C 17/02, H04Q 9/00

(54) **COMPTEUR DE FLUIDE COMMUNIQUANT AVEC UNE VANNE ÉLECTROMÉCANIQUE**
DURCHFLUSSZÄHLER ZUR KOMMUNIKATION MIT EINEM ELEKTROMECHANISCHEN VENTIL
FLOW METER COMMUNICATING WITH A ELECTROMECANICAL VALVE

(30) Priorité: 15.10.2019 FR 1911488
(43) Date de publication de la demande: 21.04.2021
(73) Titulaire: Sagemcom Energy & Telecom SAS, 92500 Rueil-Malmaison (FR)
(72) Inventeur: TEBOULLE, Henri, 92500 Rueil Malmaison (FR); LECAPPON, Jean-Paul, 92500 Rueil Malmaison (FR)
(74) Mandataire: Lavaud, Thomas

(56) Documents cités:
- CN-U- 207 008 795
- US-A1- 2014 110 613
- CHENG YAO ET AL: "Secure smart metering based on LoRa technology", 2018 IEEE 4TH INTERNATIONAL CONFERENCE ON IDENTITY, SECURITY, AND BEHAVIOR ANALYSIS (ISBA), IEEE, 11 janvier 2018 (2018-01-11), pages 1-8, XP033329244, DOI: 10.1109/ISBA.2018.8311466
- K-H SO H ET AL: "Zero-Configuration Identity-Based Signcryption Scheme for Smart Grid", SMART GRID COMMUNICATIONS (SMARTGRIDCOMM), 2010 FIRST IEEE INTERNATIONAL CONFERENCE ON, IEEE, PISCATAWAY, NJ, USA, 4 octobre 2010 (2010-10-04), pages 321-326, XP031790245, ISBN: 978-1-4244-6510-1

## Description

L'invention concerne le domaine des compteurs de fluide et, plus précisément, du pilotage des vannes positionnées à proximité des compteurs de fluide et destinées à sélectivement couper ou rétablir l'alimentation en fluide.

### ARRIERE PLAN DE L'INVENTION

Un réseau de distribution d'un fluide comprend des conduites reliées via des compteurs de fluide à des installations consommatrices du fluide.

Il est connu de monter un boîtier de coupure sur une conduite à proximité d'un compteur de fluide, généralement en aval du compteur de fluide (c'est-à-dire du côté de l'installation et non du réseau de distribution). Un tel boîtier de coupure comporte classiquement une vanne électromécanique pilotée pour sélectivement couper ou rétablir l'alimentation en fluide de l'installation.

Dans le cas d'un compteur d'eau, la vanne électromécanique est par exemple activée pour couper l'alimentation lorsqu'une fuite d'eau est détectée, ou bien lorsqu'il est prévu qu'une habitation reste vide pendant un certain temps, suite à un déménagement par exemple.

Pour éviter de faire intervenir un opérateur à chaque ouverture et fermeture de la vanne électromécanique, il convient que celle-ci puisse être commandée à distance.

La commande à distance doit être sécurisée, pour éviter qu'un individu malintentionné n'actionne frauduleusement la vanne électromécanique. Par ailleurs, les moyens de communication mis en œuvre dans le boîtier de coupure pour acquérir cette commande à distance doivent être peu consommateurs en énergie électrique, car le boîtier de coupure est alimenté par une ou des piles et doit avoir une durée de vie importante sans changer la ou les piles.

Voir aussi la publication US2014/110613 qui divulgue un compteur intégrant une vanne dont l'ouverture et la fermeture peuvent être commandées à distance.

### OBJET DE L'INVENTION

L'invention a pour objet de transmettre de manière sécurisée une commande d'ouverture ou de fermeture d'une vanne électromécanique intégrée dans un boîtier de coupure monté à proximité d'un compteur de fluide, en limitant la consommation d'énergie électrique du boîtier de coupure.

L'objet de l'invention est défini par les revendications 1-15.

### RESUME DE L'INVENTION

En vue de la réalisation de ce but, on propose un compteur de fluide comportant des moyens de communication agencés pour recevoir de l'extérieur une commande d'ouverture ou de fermeture d'une vanne électromécanique pouvant être intégrée dans un boîtier de coupure monté à proximité du compteur de fluide, des moyens d'authentification agencés pour authentifier une trame de commande intégrant la commande d'ouverture ou de fermeture, et une première interface de communication agencée pour transmettre à une deuxième interface de communication du boîtier de coupure via une liaison radioélectrique la trame de commande et une énergie électrique adaptée à alimenter électriquement la deuxième interface de communication du boîtier de coupure.

Les moyens d'authentification du compteur de fluide selon l'invention permettent d'authentifier la trame de commande, et donc de sécuriser la transmission de la commande d'ouverture ou de fermeture de la vanne électromécanique du boîtier de coupure. La deuxième interface de communication du boîtier de coupure est alimentée par la première interface de communication du compteur de fluide, de sorte que la transmission de la trame de commande n'augmente pas la consommation électrique du boîtier de coupure. On note que la transmission de la trame de commande et le pilotage de la vanne électromécanique ne nécessitent aucune présence locale humaine.

On propose de plus un compteur de fluide tel que précédemment décrit, dans lequel la première interface de communication est agencée pour écrire la trame de commande dans une mémoire du boîtier de coupure et pour lire une trame d'acquittement dans la mémoire du boîtier de coupure.

On propose de plus un compteur de fluide tel que précédemment décrit, dans lequel les moyens d'authentification sont agencés pour chiffrer au moins partiellement la trame de commande.

On propose en outre un compteur de fluide tel que précédemment décrit, dans lequel les moyens d'authentification sont agencés pour utiliser un algorithme de chiffrement ayant une clé de chiffrement symétrique qui est stockée dans une mémoire du compteur de fluide et dans la mémoire du boîtier de coupure.

On propose de plus un compteur de fluide tel que précédemment décrit, dans lequel l'algorithme de chiffrement est un algorithme de chiffrement AES utilisant le mode d'opération GCM.

On propose de plus un compteur de fluide tel que précédemment décrit, dans lequel la première interface de communication est agencée pour recevoir une trame de changement de clé pouvant être transmise par un appareil mobile amené à proximité du compteur de fluide, le compteur de fluide étant agencé pour déchiffrer la trame de changement de clé et pour remplacer la clé de chiffrement symétrique stockée dans la mémoire du compteur de fluide par une nouvelle clé de chiffrement symétrique intégrée dans la trame de changement de clé.

On propose de plus un compteur de fluide tel que précédemment décrit, dans lequel la trame de commande intègre une valeur courante d'un compteur de trames de commande, qui est incrémentée à chaque transmission de trame de commande par le compteur de fluide au boîtier de coupure.

On propose de plus un boîtier de coupure pouvant être monté à proximité d'un compteur de fluide, le boîtier de coupure comprenant :
- une vanne électromécanique ;
- une mémoire ;
- une deuxième interface de communication agencée pour recevoir via une liaison radioélectrique et pour stocker dans la mémoire une trame de commande intégrant une commande d'ouverture ou de fermeture de la vanne électromécanique, la deuxième interface de communication étant en outre agencée pour recevoir et pour être alimentée par une énergie électrique transmise via la liaison radioélectrique ;
- un composant de traitement agencé pour acquérir dans la mémoire la trame de commande, pour déchiffrer la trame de commande et en extraire la commande d'ouverture ou de fermeture, pour piloter une ouverture ou une fermeture de la vanne électromécanique, et pour écrire dans la mémoire (23) une trame d'acquittement.

On propose en outre un boîtier de coupure tel que celui qui vient d'être décrit, dans lequel le composant de traitement se trouve par défaut dans un mode de veille, la deuxième interface de communication étant agencée pour produire un signal d'activation du composant de traitement lorsque la deuxième interface de communication reçoit l'énergie électrique.

On propose en outre un boîtier de coupure tel que celui qui vient d'être décrit, dans lequel une clé de chiffrement symétrique d'un algorithme de chiffrement est stockée dans la mémoire du boîtier de coupure, le composant de traitement étant agencé pour déchiffrer la trame de commande en utilisant la clé de chiffrement symétrique.

On propose en outre un boîtier de coupure tel que celui qui vient d'être décrit, dans lequel la deuxième interface de communication est agencée pour recevoir une trame de changement de clé pouvant être transmise par un appareil mobile amené à proximité de l'organe de coupure, le composant de traitement étant agencé pour déchiffrer la trame de changement de clé et pour remplacer la clé de chiffrement symétrique stockée dans la mémoire de l'organe de coupure par une nouvelle clé de chiffrement symétrique intégrée dans la trame de changement de clé.

On propose aussi un système de mesure comportant un compteur de fluide tel que précédemment décrit et un boîtier de coupure tel que précédemment décrit.

On propose de plus un procédé de transmission d'une commande d'ouverture ou de fermeture d'une vanne électromécanique intégrée dans un boîtier de coupure positionné à proximité d'un compteur de fluide, le procédé de transmission étant mis en œuvre par un composant de traitement du compteur de fluide tel que précédemment décrit, et comprenant les étapes de :
- acquérir la commande d'ouverture ou de fermeture ;
- authentifier une trame de commande intégrant la commande d'ouverture ou de fermeture ;
- faire transmettre par la première interface de communication à une deuxième interface de communication du boîtier de coupure via une liaison radioélectrique la trame de commande et une énergie électrique adaptée à alimenter électriquement la deuxième interface de communication du boîtier de coupure.

On propose aussi un programme d'ordinateur comprenant des instructions qui conduisent le composant de traitement du compteur de fluide tel que décrit à exécuter les étapes du procédé de transmission ci-dessus.

On propose en outre un support d'enregistrement lisible par ordinateur, sur lequel est enregistré le programme d'ordinateur ci-dessus.

On propose par ailleurs un procédé de changement de clé, mis en œuvre par un composant de traitement d'un compteur de fluide tel que celui qui vient d'être décrit, une clé de chiffrement symétrique étant stockée dans une mémoire du compteur de fluide, comprenant les étapes de :
- acquérir une trame de changement de clé transmise par un appareil mobile amené à proximité du compteur de fluide, la trame de changement de clé comprenant une nouvelle clé de chiffrement symétrique et étant chiffrée grâce à la clé de chiffrement symétrique stockée dans la mémoire du compteur de fluide ;
- déchiffrer la trame de changement de clé ;
- remplacer la clé de chiffrement symétrique stockée dans la mémoire du compteur de fluide par la nouvelle clé de chiffrement symétrique.

On propose aussi un programme d'ordinateur comprenant des instructions qui conduisent le composant de traitement du compteur de fluide tel que précédemment décrit à exécuter les étapes du procédé de changement de clé qui vient d'être décrit.

On propose de plus un support d'enregistrement lisible par ordinateur, sur lequel est enregistré le programme d'ordinateur qui vient d'être décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
[Fig. 1] la figure 1 représente un Système d'Information, une *gateway* LoRa, un compteur d'eau selon l'invention et un boîtier de coupure ;
[Fig. 2] la figure 2 représente le boîtier de coupure ;
[Fig. 3] la figure 3 représente des échanges de commandes, de trames et de messages entre les entités de la figure 1 ;
[Fig. 4] la figure 4 représente une trame de commande de la vanne électromécanique du boîtier de coupure ;
[Fig. 5] la figure 5 représente une trame d'acquittement ;
[Fig. 6] la figure 6 représente une trame de changement de clé.

### DESCRIPTION DETAILLEE DE L'INVENTION

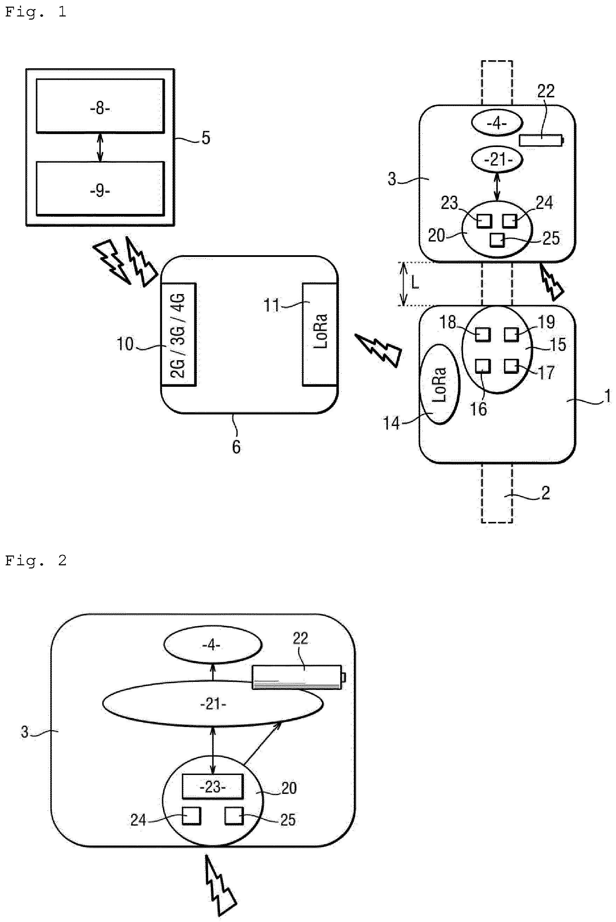

En référence aux figures 1 et 2, un compteur de fluide selon l'invention est ici un compteur d'eau 1 qui est monté sur une conduite 2 d'un réseau de distribution d'eau et qui est utilisé pour mesurer la consommation d'eau d'une installation.

Un boîtier de coupure 3 est monté sur la conduite 2 à proximité du compteur d'eau 1. La distance L entre le compteur d'eau 1 et le boîtier de coupure 3 est par exemple comprise entre 1cm et 10cm. Le boîtier de coupure 3 comprend une vanne électromécanique 4 qui est utilisée pour sélectivement couper ou rétablir l'alimentation en eau de l'installation.

Les commandes d'ouverture ou de fermeture de la vanne électromécanique 4 sont émises par un SI (pour Système d'Information) 5 qui transmet les commandes d'ouverture ou de fermeture au compteur d'eau 1 via une *gateway* LoRa 6 (*gateway* ou paserelle ; LoRa pour *Long Range*). Le compteur d'eau 1 retransmet ces commandes d'ouverture ou de fermeture au boîtier de coupure 3.

On décrit maintenant chacune de ces entités.

Le SI 5 comprend un serveur d'application 8 et un serveur LNS (pour *LoRa Network Server*) 9. Le serveur LNS 9 est destiné notamment à gérer les communications avec l'ensemble des *gateways* LoRa et avec tous les compteurs d'eau auxquels le serveur LNS 9 est connecté. Le serveur LNS 9 communique ici avec la *gateway* LoRa 6 via un réseau 2G, 3G ou 4G.

La *gateway* LoRa 6 comprend donc des premiers moyens de communication 10 pour communiquer avec le serveur LNS 9 via un réseau 2G, 3G ou 4G, et des deuxièmes moyens de communication 11 pour communiquer avec le compteur d'eau 1. Les deuxièmes moyens de communication 11 sont ici adaptés à communiquer via un réseau LoRaWAN (pour *Long Range Wide Area Network*)*.*

Le compteur d'eau 1 comprend tout d'abord des moyens de communication 14 qui sont eux aussi adaptés à communiquer via un réseau LoRaWAN. Le compteur d'eau 1 reçoit les commandes d'ouverture ou de fermeture de la vanne électromécanique 4 grâce à ces moyens de communication 14.

Le compteur d'eau 1 comprend aussi une première interface de communication 15 qui est ici une interface NFC maître. La première interface de communication 15 comprend un premier composant de traitement, en l'occurrence un premier microcontrôleur 16, une première mémoire 17, un émetteur/récepteur NFC 18 et une première antenne 19. L'émetteur/récepteur NFC 18 comprend ici un amplificateur, un modulateur et un démodulateur.

Le compteur d'eau 1 comprend de plus des moyens d'authentification qui comprennent ici un module logiciel programmé dans le premier microcontrôleur 16 et une première zone de la première mémoire 17.

Le boîtier de coupure 3, quant à lui, comprend, outre la vanne électromécanique 4, une deuxième interface de communication 20 qui est ici une interface NFC esclave, un deuxième composant de traitement, en l'occurrence un deuxième microcontrôleur 21, et une pile 22.

La deuxième interface de communication 20 comprend une deuxième mémoire 23, un récepteur NFC 24 et une deuxième antenne 25. Le récepteur NFC 24 comprend par exemple un démodulateur.

Le deuxième microcontrôleur 21 est agencé pour piloter (via un *driver* non représenté) une ouverture ou une fermeture de la vanne électromécanique 4. Le deuxième microcontrôleur 21 comprend ici une interface I2C pour accéder à la deuxième mémoire 23 en lecture et en écriture.

La pile 22 du boîtier de coupure 3 est utilisée pour alimenter le deuxième microcontrôleur 21 et la vanne électromécanique 4 (ainsi que le *driver*)*.*

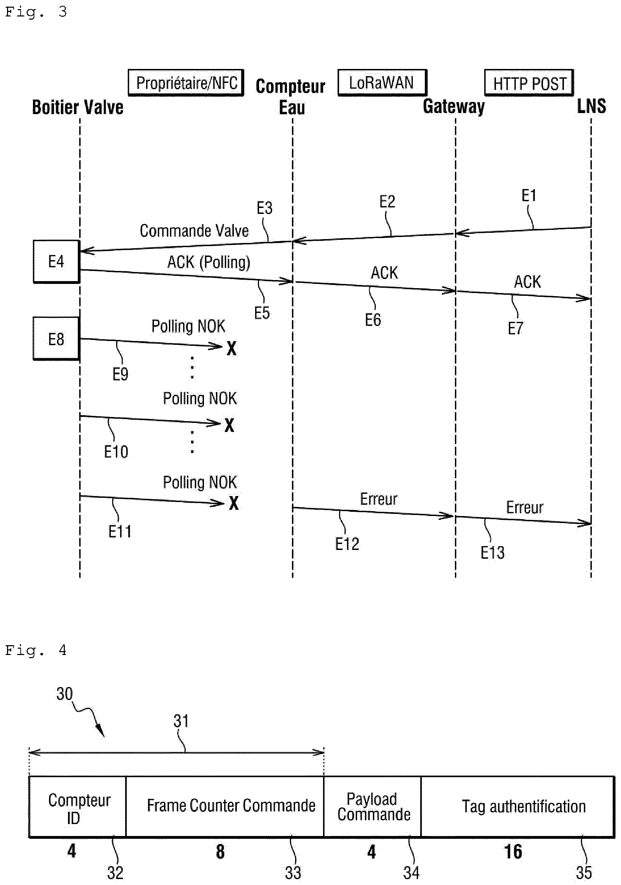

On décrit maintenant, en référence à la figure 3, la manière dont coopèrent les entités qui viennent d'être évoquées.

Le serveur d'application 8 produit une commande d'ouverture ou de fermeture de la vanne électromécanique 4 du boîtier de coupure 3, et le serveur LNS 9 transmet la commande d'ouverture ou de fermeture à la *gateway* LoRa 6 en utilisant une requête HTTP POST (étape E1). La *gateway* LoRa 6 retransmet la commande d'ouverture ou de fermeture au compteur d'eau 1 sur le réseau LoRaWAN (étape E2). La commande d'ouverture ou de fermeture est sécurisée conformément au protocole LoRa.

Le compteur d'eau 1 acquiert la commande d'ouverture ou de fermeture et la déchiffre, conformément à nouveau au protocole LoRa.

Le premier microcontrôleur 16 du compteur d'eau 1 génère une trame de commande, qui intègre la commande d'ouverture ou de fermeture.

Les moyens d'authentification du compteur d'eau 1 vont alors authentifier la trame de commande. L'authentification consiste à chiffrer au moins partiellement la trame de commande.

Les moyens d'authentification utilisent un algorithme de chiffrement ayant une clé de chiffrement symétrique « secrète » qui est stockée dans la première zone de la première mémoire 17 de la première interface de communication 15.

L'algorithme de chiffrement est un algorithme de chiffrement AES (pour *Advanced Encryption Standard*) utilisant le mode d'opération GCM (pour *Galois Counter Mode*)*.* L'algorithme de chiffrement permet de chiffrer et de déchiffrer des données par blocs de 128 bits. La clé de chiffrement symétrique est une clé sur 128 bits.

La clé de chiffrement symétrique est aussi stockée dans une première zone de la deuxième mémoire 23 de la deuxième interface de communication 20 du boîtier de coupure 3, et est donc connue à la fois de la première interface de communication 15 et de la deuxième interface de communication 20. Le compteur d'eau 1 et le boîtier de coupure 3 sont associés via cette même clé de chiffrement symétrique. L'association est par exemple réalisée en usine, à la fin de la fabrication du compteur d'eau 1 et du boîtier de coupure 3, par chargement de la clé de chiffrement symétrique dans la première mémoire 17 du compteur d'eau 1 et dans la deuxième mémoire 23 de l'organe de coupure 3. L'association peut aussi être réalisée lors de l'installation sur site.

Le compteur d'eau 1 transmet alors la trame de commande au boîtier de coupure 3 en utilisant la technologie NFC (étape E3). La première interface de communication 15 produit grâce à l'émetteur/récepteur NFC 18 et à la première antenne 19 un champ électromagnétique qui va induire un courant dans la deuxième antenne 25 de la deuxième interface de communication 20. Le champ électromagnétique permet de former une liaison radioélectrique permettant à la première interface de communication 15 de transmettre à la deuxième interface de communication 20 la trame de commande, mais aussi une énergie électrique qui alimente la deuxième interface de communication 20. La deuxième interface de communication 20 n'est donc pas alimentée par la pile 22 du boîtier de coupure 3 mais uniquement par cette énergie électrique transmise via la liaison radioélectrique.

On note ici qu'avantageusement, pour optimiser la transmission d'énergie électrique, la première antenne 19 et la deuxième antenne 25 sont positionnées en face l'une de l'autre et s'étendent chacune dans un plan perpendiculaire à l'axe passant par leurs centres respectifs.

La première interface de communication 15 écrit alors la trame de commande dans une deuxième zone de la deuxième mémoire 23 de la deuxième interface de communication 20.

Le deuxième microcontrôleur 21 du boîtier de coupure 3 se trouve en général, par défaut, dans un mode de veille. Lorsque la deuxième interface de communication 20 reçoit l'énergie électrique transmise par la première interface de communication 15, elle produit un signal d'activation qui va réveiller le deuxième microcontrôleur 21.

Le signal d'activation est un signal d'interruption appliqué sur une patte du deuxième microcontrôleur 21. En variante, un signal de type « *memory busy* », généré par la deuxième interface de communication 20, pourrait aussi être utilisé pour réveiller le deuxième microcontrôleur 21.

Le deuxième microcontrôleur 21 va alors accéder à la trame de commande en lisant dans la deuxième zone de la deuxième mémoire 23. Le deuxième microcontrôleur 21 déchiffre grâce à sa connaissance de la clé de chiffrement symétrique la trame de commande, extrait de la trame de commande la commande d'ouverture ou de fermeture, et pilote la vanne électromécanique 4 en fonction de ladite commande d'ouverture ou de fermeture.

Puis, suite à l'ouverture ou à la fermeture de la vanne électromécanique 4, le deuxième microcontrôleur 21 écrit dans une troisième zone de la deuxième mémoire 23 de la deuxième interface de communication 20, à destination de la première interface de communication 15 du compteur d'eau 1, une trame d'acquittement intégrant un acquittement (étape E4). On note que la troisième zone de la deuxième mémoire 23 et la deuxième zone de la deuxième mémoire 23 sont possiblement mais pas nécessairement les mêmes.

Le deuxième microcontrôleur 21 authentifie la trame d'acquittement en utilisant l'algorithme de chiffrement précédemment évoqué.

La première interface de communication 15 accède à la troisième zone de la deuxième mémoire 23 de la deuxième interface de communication 20, pour tenter de lire dans la troisième zone de la deuxième mémoire 23 une trame d'acquittement (étape E5). La lecture est réalisée par une méthode de *polling :* à intervalles réguliers, la première interface de communication 15 accède au contenu de la troisième zone de la deuxième mémoire 23 pour déterminer si une trame d'acquittement se trouve bien dans la troisième zone de la deuxième mémoire 23.

Si la trame d'acquittement est bien présente lors de la première tentative de lecture, le compteur d'eau 1 va lui-même remonter un message d'acquittement à la *gateway* LoRa 6 (étape E6). La *gateway* LoRa 6 retransmet le message d'acquittement au serveur d'application 8 du SI 5 via le serveur LNS 9 (étape E7).

Suite à la transmission de la trame de commande au boîtier de coupure 3, si aucune trame d'acquittement n'est stockée dans la troisième zone de la deuxième mémoire 23 (étape E8), la première tentative de lecture échoue (étape E9). La première interface de communication 15 effectue alors une deuxième tentative de lecture (étape E10). Si celle-ci échoue, la première interface de communication 15 effectue une troisième tentative de lecture (étape E11). Chaque tentative de lecture est séparée de la précédente d'une durée prédéterminée, ici égale à 1mn. Après un nombre prédéterminé de tentatives de lecture infructueuses, ici égal à 3, le compteur d'eau 1 remonte un message d'erreur à la *gateway* LoRa 6 (étape E12). La *gateway* LoRa 6 retransmet le message d'erreur au serveur d'application 8 du SI 5 via le serveur LNS 9 (étape E13) .

Le premier microcontrôleur 16 de la première interface de communication 15 met en œuvre un compteur de trames de commande dont la valeur courante est intégrée dans la trame de commande. Le compteur de trames de commande est incrémenté par le premier microcontrôleur 16 à chaque transmission de trame de commande par le compteur d'eau 1 au boîtier de coupure 3.

Ce compteur de trames de commande permet d'éviter le « rejeu » d'une trame de commande, c'est-à-dire d'éviter qu'une ancienne trame de commande, écoutée et acquise par un individu malintentionné, soit utilisée pour produire une commande d'ouverture ou de fermeture destinée à commander frauduleusement le boîtier de coupure 3. Ainsi, lorsque le deuxième microcontrôleur 21 du boîtier de coupure acquiert une trame de commande, il vérifie que la valeur courante du compteur de trames de commande, intégrée dans la trame de commande, est supérieure strictement à celle intégrée dans la trame de commande précédente.

De même, le deuxième microcontrôleur 21 du boîtier de coupure 3 met en œuvre un compteur de trames d'acquittement qui est incrémenté à chaque fois que le deuxième microcontrôleur 21 produit une trame d'acquittement, et dont la valeur courante est intégrée dans la trame d'acquittement.

Il est possible de changer la clé de chiffrement symétrique utilisée par le compteur d'eau 1 et par le boîtier de coupure 3. La modification de la clé de chiffrement symétrique est réalisée localement. Un opérateur se rend à proximité du compteur d'eau 1 et donc du boîtier de coupure 3 et utilise un appareil mobile, par exemple un *smartphone,* qui a récupéré préalablement la clé de chiffrement symétrique actuellement en vigueur. L'appareil mobile programme une nouvelle clé de chiffrement symétrique à la fois dans le compteur d'eau 1 et dans le boîtier de coupure 3. L'appareil mobile envoie pour cela une trame de changement de clé, d'une part, au compteur d'eau 1, et d'autre part, de manière indépendante, au boîtier de coupure 3. La nouvelle clé de chiffrement symétrique est intégrée dans la trame de changement de clé. La trame de changement de clé est authentifiée grâce à l'algorithme de chiffrement précédemment évoqué, en utilisant la clé de chiffrement symétrique actuellement en vigueur.

Le premier microcontrôleur 16 de la première interface de communication 15 du compteur d'eau 1 acquiert la trame de changement de clé et la stocke dans une deuxième zone de la première mémoire 17. Le deuxième microcontrôleur 21 du boîtier de coupure 3 acquiert la trame de changement de clé et la stocke dans une quatrième zone de la deuxième mémoire 23.

Le premier microcontrôleur 16 et le deuxième microcontrôleur 21 utilisent alors la clé de chiffrement symétrique actuellement en vigueur et stockée dans la première mémoire 17 et dans la deuxième mémoire 23 pour déchiffrer la trame de changement de clé. Le premier microcontrôleur 16 et le deuxième microcontrôleur 21 acquièrent et stockent alors la nouvelle clé de chiffrement symétrique respectivement dans la première zone de la première mémoire 17 et dans la deuxième zone de la deuxième mémoire 23.

L'appareil mobile met en œuvre un compteur de trames de changement de clé dont la valeur courante est intégrée dans la trame de changement de clé. Le compteur de trames de changement de clé est incrémenté par l'appareil mobile à chaque transmission de trame de changement de clé par l'appareil mobile au compteur d'eau 1 et au boîtier de coupure 3. La trame de changement de clé est authentifiée grâce à l'algorithme de chiffrement précédemment évoqué utilisant la clé de chiffrement symétrique actuellement en vigueur.

On décrit maintenant plus en détail la structure d'une trame de commande, d'une trame d'acquittement et d'une trame de changement de clé.

En référence à la figure 4, une trame de commande 30 comprend tout d'abord une valeur initiale IV 31 (pour *Initial Value*), qui est non chiffrée et qui est conforme à la recommandation NIST *Special Publication* 800-38, chapitre 8.2.1.

La valeur initiale IV 31 est découpée en un premier champ 32 et en un deuxième champ 33.

Le premier champ 32 est un champ de 4 octets qui contient un identifiant de l'émetteur du message, en l'occurrence un identifiant du compteur d'eau 1.

Le deuxième champ 33 est un champ de 8 octets qui contient la valeur courante du compteur de trames de commande. Le deuxième champ 33 permet plus de 18 × 10¹⁸ commandes sans changement de clé de chiffrement symétrique, et est réinitialisé à 0 lors de chaque changement de clé de chiffrement symétrique.

La trame de commande 30 comprend ensuite une *payload* 34, qui est un champ fonctionnel destiné à identifier la fonction de la trame : commande d'ouverture, commande de fermeture ou acquittement. La *payload* 34 est chiffrée par l'algorithme de chiffrement AES utilisant le mode d'opération GCM, et comporte 4 octets.

La *payload* 34 comprend un octet de commande qui prend les valeurs suivantes :
'0' : pour une commande d'ouverture de la vanne électromécanique 4. Il s'agit alors d'une trame de commande venant du compteur d'eau 1 ;
1' : pour une commande de fermeture de la vanne électromécanique. Il s'agit alors d'une trame de commande venant du compteur d'eau 1 ;
'2' : pour un acquittement. Il s'agit alors d'une trame d'acquittement venant du boîtier de coupure 3.

L'octet de commande de la *payload* 34 de la trame de commande 30 a donc pour valeur '0' dans le cas d'une commande d'ouverture et pour valeur '1' dans le cas d'une commande de fermeture.

La *payload* 34 comprend de plus 3 octets non utilisés.

On note que l'algorithme de chiffrement utilisé génère un aléa de 16 octets sur l'octet de commande.

La trame de commande 30 comprend ensuite un code d'authentification de message 35 (aussi appelé tag) sur 16 octets généré par l'algorithme de chiffrement AES utilisant le mode d'opération GCM. Le code d'authentification de message 35 permet d'authentifier la trame de commande 30, d'assurer l'intégrité des données qu'elle contient et de confirmer que la trame de commande 30 provient bien d'un émetteur attendu (en l'occurrence ici du compteur d'eau 1).

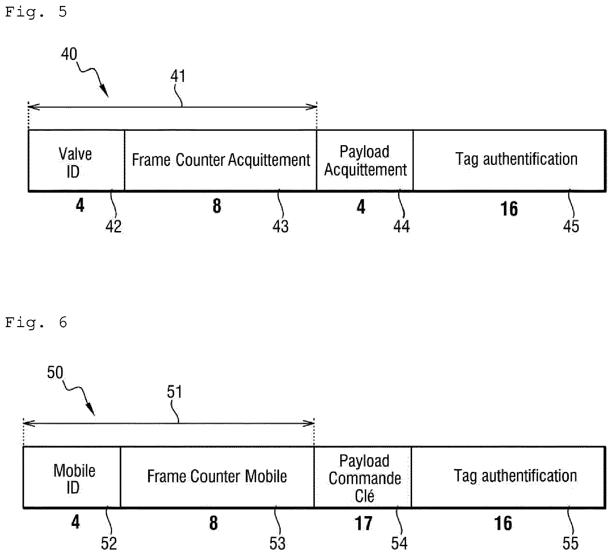

En référence à la figure 5, une trame d'acquittement 40 comprend tout d'abord une valeur initiale IV 41 découpée en un premier champ 42 et en un deuxième champ 43.

Le premier champ 42 est un champ de 4 octets qui contient un identifiant de l'émetteur du message, en l'occurrence un identifiant du boîtier de coupure 3.

Le deuxième champ 43 est un champ de 8 octets qui contient la valeur courante du compteur de trames d'acquittement. Ce deuxième champ 43 permet plus de 18×10¹⁸ acquittements sans changement de clé de chiffrement symétrique, et est réinitialisé à 0 lors de chaque changement de clé de chiffrement symétrique.

La trame d'acquittement 40 comprend ensuite une *payload* 44 chiffrée par l'algorithme de chiffrement AES utilisant le mode d'opération GCM, et comporte 4 octets.

L'octet de commande de la *payload* 44 de la trame de commande 40 a pour valeur '2'.

La *payload* 44 comprend de plus 3 octets non utilisés.

On note que l'algorithme de chiffrement utilisé génère un aléa de 16 octets sur l'octet de commande.

La trame d'acquittement 40 comprend ensuite un code d'authentification de message 45 (aussi appelé tag) sur 16 octets généré par l'algorithme de chiffrement AES utilisant le mode d'opération GCM. Le code d'authentification de message 45 permet d'authentifier la trame d'acquittement 40, d'assurer l'intégrité des données qu'elle contient et de confirmer que la trame d'acquittement 40 provient bien d'un émetteur attendu (en l'occurrence ici du boîtier de coupure 3) .

En référence à la figure 6, une trame de changement de clé 50 comprend tout d'abord une valeur initiale IV 51 (pour *Initial Value*), qui est non chiffrée et qui est conforme à la recommandation NIST *Special Publication* 800-38, chapitre 8.2.1.

La valeur initiale IV 51 est découpée en un premier champ 52 et en un deuxième champ 53.

Le premier champ 52 est un champ de 4 octets qui contient un identifiant de l'émetteur du message. Ici, on choisit un même identifiant fixe pour tous les appareils mobiles.

Le deuxième champ 53 est un champ de 8 octets qui contient la valeur courante du compteur de trames de changement de clé. Le compteur est initialisé à 0 lors du premier changement de clé réalisé par l'appareil mobile.

La trame de changement de clé 50 comprend ensuite une *payload* 54 chiffrée par l'algorithme de chiffrement. La *payload* 54 est chiffrée par le KMS (*Key Management System*) en utilisant la clé de chiffrement symétrique actuellement en vigueur qui est stockée dans la première mémoire 17 du compteur d'eau 1 et dans la deuxième mémoire 23 du boîtier de coupure 3, et qui est connue de l'appareil mobile.

La *payload* 54 comprend 17 octets comprenant un octet de commande qui prend la valeur '3', et 16 octets de clé (soit 128 bits).

La trame de changement de clé 50 comprend ensuite un code d'authentification de message 55 (aussi appelé tag) sur 16 octets généré par l'algorithme de chiffrement AES utilisant le mode d'opération GCM. Le code d'authentification de message 55 permet d'authentifier la trame de changement de clé 50, d'assurer l'intégrité des données qu'elle contient et de confirmer que la trame de changement de clé 50 provient bien d'un émetteur attendu (en l'occurrence ici d'un appareil mobile prévu pour cet usage).

Bien entendu, l'invention n'est pas limitée au mode de réalisation décrit mais englobe toute variante entrant dans le champ de l'invention telle que définie par les revendications.

Les technologies et les protocoles de communication qui permettent de connecter entre eux le SI, la *gateway,* le compteur de fluide et le boîtier de coupure pourraient être différents de ceux décrits ici.

La première interface de communication et la deuxième interface de communication ne sont pas nécessairement des interfaces NFC. Un autre type de technologie ou de protocole, et par exemple une technologie et un protocole « propriétaires », pourraient être utilisés. Toute liaison radioélectrique, qui permet à la fois de transmettre des données (commandes, acquittements, etc.) et une énergie électrique suffisante pour alimenter une interface de communication, rentre dans le champ de l'invention.

L'invention peut bien sûr être mise en œuvre avec un compteur qui n'est pas un compteur d'eau : compteur de gaz, de pétrole, etc.

D'autres algorithmes de chiffrement pourraient être utilisés, et par exemple les algorithmes *Twofish, Serpent, Blowfish.* Plus généralement, les moyens d'authentification pourraient être différents de ceux décrits ici. Tout moyen d'authentification, permettant de certifier l'authenticité d'une trame, peut être utilisé.

Le premier composant de traitement et le deuxième composant de traitement ne sont pas nécessairement des microcontrôleurs, mais pourraient être des composants différents : FPGA, ASIC, processeur, etc.

## Revendications

1. Compteur de fluide (1) comportant des moyens de communication (14) agencés pour recevoir de l'extérieur une commande d'ouverture ou de fermeture d'une vanne électromécanique (4) intégrée dans un boîtier de coupure (3) monté à proximité du compteur de fluide (1), des moyens d'authentification agencés pour authentifier une trame de commande (30) intégrant la commande d'ouverture ou de fermeture, et une première interface de communication (15) agencée pour transmettre à une deuxième interface de communication (20) du boîtier de coupure (3) via une liaison radioélectrique la trame de commande (30) et une énergie électrique adaptée à alimenter électriquement la deuxième interface de communication (20) du boîtier de coupure (3).

2. Compteur de fluide selon la revendication 1, dans lequel la première interface de communication (15) est agencée pour écrire la trame de commande dans une mémoire (23) du boîtier de coupure (3) et pour lire une trame d'acquittement (40) dans la mémoire (23) du boîtier de coupure (3).

3. Compteur de fluide selon l'une des revendications précédentes, dans lequel les moyens d'authentification sont agencés pour chiffrer au moins partiellement la trame de commande.

4. Compteur de fluide selon la revendication 3, dans lequel les moyens d'authentification sont agencés pour utiliser un algorithme de chiffrement ayant une clé de chiffrement symétrique qui est stockée dans une mémoire (17) du compteur de fluide (1) et dans la mémoire (23) du boîtier de coupure (3) .

5. Compteur de fluide selon la revendication 4, dans lequel l'algorithme de chiffrement est un algorithme de chiffrement AES utilisant le mode d'opération GCM.

6. Compteur de fluide selon la revendication 4, dans lequel la première interface de communication (15) est agencée pour recevoir une trame de changement de clé (50) pouvant être transmise par un appareil mobile amené à proximité du compteur de fluide (1), le compteur de fluide (1) étant agencé pour déchiffrer la trame de changement de clé (50) et pour remplacer la clé de chiffrement symétrique stockée dans la mémoire (17) du compteur de fluide (1) par une nouvelle clé de chiffrement symétrique intégrée dans la trame de changement de clé (50).

7. Compteur de fluide selon l'une des revendications précédentes, dans lequel la trame de commande (30) intègre une valeur courante d'un compteur de trames de commande, qui est incrémentée à chaque transmission de trame de commande par le compteur de fluide au boîtier de coupure.

8. Boîtier de coupure (3) pouvant être monté à proximité d'un compteur de fluide (1), le boîtier de coupure comprenant :
- une vanne électromécanique (4) ;
- une mémoire (23) ;
- une deuxième interface de communication (20) agencée pour recevoir via une liaison radioélectrique et pour stocker dans la mémoire (23) une trame de commande (30) transmise par le compteur de fluide et intégrant une commande d'ouverture ou de fermeture de la vanne électromécanique (4), la deuxième interface de communication étant en outre agencée pour recevoir et pour être alimentée par une énergie électrique transmise par le compteur de fluide via la liaison radioélectrique ;
- un composant de traitement (21) agencé pour acquérir dans la mémoire (23) la trame de commande, pour déchiffrer la trame de commande et en extraire la commande d'ouverture ou de fermeture, pour piloter une ouverture ou une fermeture de la vanne électromécanique, et pour écrire dans la mémoire (23) une trame d'acquittement,
une clé de chiffrement symétrique d'un algorithme de chiffrement étant stockée dans la mémoire (23) du boîtier de coupure (3), le composant de traitement (21) étant agencé pour déchiffrer la trame de commande en utilisant la clé de chiffrement symétrique.

9. Boîtier de coupure selon la revendication 8, dans lequel le composant de traitement (21) se trouve par défaut dans un mode de veille, la deuxième interface de communication (20) étant agencée pour produire un signal d'activation du composant de traitement (21) lorsque la deuxième interface de communication reçoit l'énergie électrique.

10. Boîtier de coupure selon l'une des revendications 8 à 9, dans lequel la deuxième interface de communication (20) est agencée pour recevoir une trame de changement de clé (50) pouvant être transmise par un appareil mobile amené à proximité de l'organe de coupure, le composant de traitement (21) étant agencé pour déchiffrer la trame de changement de clé et pour remplacer la clé de chiffrement symétrique stockée dans la mémoire (23) de l'organe de coupure par une nouvelle clé de chiffrement symétrique intégrée dans la trame de changement de clé.

11. Système de mesure comportant un compteur de fluide (1) selon l'une des revendications 1 à 7 et un boîtier de coupure (3) selon l'une des revendications 8 à 10.

12. Procédé de transmission d'une commande d'ouverture ou de fermeture d'une vanne électromécanique (4) intégrée dans un boîtier de coupure (3) positionné à proximité d'un compteur de fluide (1), le procédé de transmission étant mis en œuvre par un composant de traitement (16) du compteur de fluide selon l'une des revendications 1 à 7, et comprenant les étapes de :
- acquérir la commande d'ouverture ou de fermeture ;
- authentifier une trame de commande (30) intégrant la commande d'ouverture ou de fermeture ;
- faire transmettre par la première interface de communication (15) à une deuxième interface de communication (20) du boîtier de coupure (3) via une liaison radioélectrique la trame de commande (30) et une énergie électrique adaptée à alimenter électriquement la deuxième interface de communication (20) du boîtier de coupure (3).

13. Procédé de transmission selon la revendication 12, une clé de chiffrement symétrique étant stockée dans une mémoire (17) du compteur de fluide, le procédé comprenant en outre les étapes de :
- acquérir une trame de changement de clé (50) transmise par un appareil mobile amené à proximité du compteur de fluide, la trame de changement de clé comprenant une nouvelle clé de chiffrement symétrique et étant chiffrée grâce à la clé de chiffrement symétrique stockée dans la mémoire du compteur de fluide ;
- déchiffrer la trame de changement de clé (50) ;
- remplacer la clé de chiffrement symétrique stockée dans la mémoire du compteur de fluide par la nouvelle clé de chiffrement symétrique.

14. Programme d'ordinateur comprenant des instructions qui conduisent le composant de traitement du compteur de fluide selon l'une des revendications 1 à 7 à exécuter les étapes du procédé de transmission selon l'une des revendications 12 ou 13.

15. Support d'enregistrement lisible par ordinateur, sur lequel est enregistré le programme d'ordinateur selon la revendication 14.

## Patentansprüche

1. Fluidzähler (1), umfassend Kommunikationsmittel (14), die ausgebildet sind, von außen einen Öffnungs- oder Schließbefehl für ein elektromechanisches Ventil (4) zu empfangen, das in ein Unterbrechungsgehäuse (3) integriert ist, das in der Nähe des Fluidzählers (1) montiert ist, Authentifizierungsmittel, die ausgebildet sind, um einen Befehlsrahmen (30) zu authentifizieren, der den Öffnungs- oder Schließbefehl integriert, und eine erste Kommunikationsschnittstelle (15), die ausgebildet ist, den Befehlsrahmen (30) und elektrische Energie über eine Funkverbindung an eine zweite Kommunikationsschnittstelle (20) des Unterbrechungsgehäuses (3) zu übertragen, wobei die elektrische Energie angepasst ist, die zweite Kommunikationsschnittstelle (20) des Unterbrechungsgehäuses (3) elektrisch zu versorgen.

2. Fluidzähler nach Anspruch 1, bei dem die erste Kommunikationsschnittstelle (15) ausgebildet ist, den Befehlsrahmen in einen Speicher (23) des Unterbrechungsgehäuses (3) zu schreiben und einen Quittungsrahmen (40) in dem Speicher (23) des Unterbrechungsgehäuses (3) zu lesen.

3. Fluidzähler nach einem der vorhergehenden Ansprüche, bei dem die Authentifizierungsmittel ausgebildet sind, den Befehlsrahmen zumindest teilweise zu verschlüsseln.

4. Fluidzähler nach Anspruch 3, bei dem die Authentifizierungsmittel ausgebildet sind, einen Verschlüsselungsalgorithmus zu verwenden, der einen symmetrischen Verschlüsselungsschlüssel hat, der in einem Speicher (17) des Fluidzählers (1) und in dem Speicher (23) des Unterbrechungsgehäuses (3) gespeichert ist.

5. Fluidzähler nach Anspruch 4, bei dem der Verschlüsselungsalgorithmus ein AES-Verschlüsselungsalgorithmus ist, der den Betriebsmodus GCM verwendet.

6. Fluidzähler nach Anspruch 4, bei dem die erste Kommunikationsschnittstelle (15) ausgebildet ist, einen Schlüsseländerungsrahmen (50) zu empfangen, der von einem mobilen Gerät, das in die Nähe des Fluidzählers (1) gebracht wird, übertragen werden kann, wobei der Fluidzähler (1) ausgebildet ist, den Schlüsseländerungsrahmen (50) zu entschlüsseln und den symmetrischen Verschlüsselungsschlüssel, der in dem Speicher (17) des Fluidzählers (1) gespeichert ist, durch einen neuen symmetrischen Verschlüsselungsschlüssel zu ersetzen, der in den Schlüsseländerungsrahmen (50) integriert ist.

7. Fluidzähler nach einem der vorhergehenden Ansprüche, bei dem der Befehlsrahmen (30) einen laufenden Wert eines Befehlsrahmenzählers integriert, der bei jeder Befehlsrahmenübertragung durch den Fluidzähler an das Unterbrechungsgehäuse inkrementiert wird.

8. Unterbrechungsgehäuse (3), das in der Nähe eines Fluidzählers (1) montiert werden kann, wobei das Unterbrechungsgehäuse umfasst:
- ein elektromechanisches Ventil (4);
- einen Speicher (23);
- eine zweite Kommunikationsschnittstelle (20), die ausgebildet ist, über eine Funkverbindung einen Befehlsrahmen (30), der durch den Fluidzähler übertragen und einen Öffnungs- oder Schließbefehl für das elektromechanische Ventil (4) integriert, zu empfangen und in dem Speicher (23) zu speichern, wobei die zweite Kommunikationsschnittstelle ferner ausgebildet ist, eine elektrische Energie, die durch den Fluidzähler über die Funkverbindung übertragen wird, zu empfangen und von ihr gespeist zu werden;
- eine Verarbeitungskomponente (21), die ausgebildet ist, den Befehlsrahmen in dem Speicher (23) zu erfassen, den Befehlsrahmen zu entschlüsseln und daraus den Öffnungs- oder Schließbefehl zu extrahieren, ein Öffnen oder ein Schließen des elektromechanischen Ventils zu steuern und einen Quittungsrahmen in den Speicher (23) zu schreiben, wobei ein symmetrischer Verschlüsselungsschlüssel eines Verschlüsselungsalgorithmus in dem Speicher (23) des Unterbrechungsgehäuses (3) gespeichert ist, wobei die Verarbeitungskomponente (21) ausgebildet ist, den Befehlsrahmen zu entschlüsseln, indem der symmetrische Verschlüsselungsschlüssel verwendet wird.

9. Unterbrechungsgehäuse nach Anspruch 8, bei dem sich die Verarbeitungskomponente (21) standardmäßig in einem Stand-by-Modus befindet, wobei die zweite Kommunikationsschnittstelle (20) ausgebildet ist, ein Aktivierungssignal zur Aktivierung der Verarbeitungskomponente (21) zu erzeugen, wenn die zweite Kommunikationsschnittstelle die elektrische Energie empfängt.

10. Unterbrechungsgehäuse nach einem der Ansprüche 8 bis 9, bei dem die zweite Kommunikationsschnittstelle (20) ausgebildet ist, einen Schlüsseländerungsrahmen (50) zu empfangen, der durch ein mobiles Gerät, das in die Nähe des Unterbrechungsorgans gebracht wird, übertragen werden kann, wobei die Verarbeitungskomponente (21) ausgebildet ist, den Schlüsseländerungsrahmen zu entschlüsseln und den in dem Speicher (23) des Unterbrechungsorgans gespeicherten symmetrischen Verschlüsselungsschlüssel durch einen neuen symmetrischen Verschlüsselungsschlüssel zu ersetzen, der in den Schlüsseländerungsrahmen integriert ist.

11. Messsystem, umfassend einen Fluidzähler (1) nach einem der Ansprüche 1 bis 7 und ein Unterbrechungsgehäuse (3) nach einem der Ansprüche 8 bis 10.

12. Übertragungsverfahren zum Übertragen eines Öffnungs- oder Schließbefehls für ein elektromechanisches Ventil (4), das in ein Unterbrechungsgehäuse (3) integriert ist, das in der Nähe eines Fluidzählers (1) positioniert ist, wobei das Übertragungsverfahren durch eine Verarbeitungskomponente (16) des Fluidzählers nach einem der Ansprüche 1 bis 7 durchgeführt wird, und die Schritte umfasst:
- Erfassen des Öffnungs- oder Schließbefehls;
- Authentifizieren eines Befehlsrahmens (30), der den Öffnungs- oder Schließbefehl integriert;
- Veranlassen, dass der Befehlsrahmen (30) und eine elektrische Energie über eine Funkverbindung durch die erste Kommunikationsschnittstelle (15) an eine zweite Kommunikationsschnittstelle (20) des Unterbrechungsgehäuses (3) übertragen werden, wobei die elektrische Energie angepasst ist, die zweite Kommunikationsschnittstelle (20) des Unterbrechungsgehäuses (3) elektrisch zu versorgen.

13. Übertragungsverfahren nach Anspruch 12, wobei ein symmetrischer Verschlüsselungsschlüssel in einem Speicher (17) des Fluidzählers gespeichert wird, wobei das Verfahren ferner die Schritte umfasst:
- Erfassen eines Schlüsseländerungsrahmens (50), der durch ein mobiles Gerät, das in die Nähe des Fluidzählers gebracht wird, übertragen wird, wobei der Schlüsseländerungsrahmen einen neuen symmetrischen Verschlüsselungsschlüssel umfasst und dank des in dem Speicher des Fluidzählers gespeicherten symmetrischen Verschlüsselungsschlüssels verschlüsselt wird;
- Entschlüsseln des Schlüsseländerungsrahmens (50);
- Ersetzen des in dem Speicher des Fluidzählers gespeicherten symmetrischen Verschlüsselungsschlüssels durch den neuen symmetrischen Verschlüsselungsschlüssel.

14. Computerprogramm, umfassend Anweisungen, die die Verarbeitungskomponente des Fluidzählers nach einem der Ansprüche 1 bis 7 veranlassen, die Schritte des Übertragungsverfahrens nach einem der Ansprüche 12 oder 13 auszuführen.

15. Computerlesbarer Aufzeichnungsträger, auf dem das Computerprogramm nach Anspruch 14 gespeichert ist.

## Claims

1. A fluid meter (1) comprising communication means (14) arranged to receive an external opening or closing command to open or close an electromechanical valve (4) included in a cut-off unit (3) mounted in the proximity of the fluid meter (1), authentication means arranged to authenticate a control frame (30) including the opening or closing command, and a first communication interface (15) arranged to transmit both the control frame (30) and electrical energy to a second communication interface (20) of the cut-off unit (3) via a wireless link, the electrical energy being suitable for electrically powering the second communication interface (20) of the cut-off unit (3).

2. A fluid meter according to claim 1, wherein the first communication interface (15) is arranged to write the control frame in a memory (23) of the cut-off unit (3) and to read an acknowledgement frame (40) in the memory (23) of the cut-off unit (3).

3. A fluid meter according to any preceding claim, wherein the authentication means are arranged to encrypt the control frame, at least in part.

4. A fluid meter according to claim 3, wherein the authentication means are arranged to use an encryption algorithm having a symmetrical encryption key that is stored in a memory (17) of the fluid meter (1) and in the memory (23) of the cut-off unit (3).

5. A fluid meter according to claim 4, wherein the encryption algorithm is an AES encryption algorithm using the GCM mode of operation.

6. A fluid meter according to claim 4, wherein the first communication interface (15) is arranged to receive a key-change frame (50) that might be transmitted by a mobile appliance brought into the proximity of the fluid meter (1), the fluid meter (1) being arranged to decrypt the key-change frame (50) and to replace the symmetrical encryption key stored in the memory (17) of the fluid meter (1) with a new symmetrical encryption key included in the key-change frame (50).

7. A fluid meter according to any preceding claim, wherein the control frame (30) includes a current value of a control frame counter that is incremented each time a control frame is transmitted by the fluid meter to the cut-off unit.

8. A cut-off unit (3) suitable for being mounted in the proximity of a fluid meter (1), the cut-off unit comprising:
• an electromechanical valve (4);
• a memory (23);
• a second communication interface (20) arranged to receive a control frame (30) via a wireless link and to store it in the memory (23), the control frame (30) being transmitted by the fluid meter and including an opening or closing command to open or close the electromechanical valve (4), the second communication interface also being arranged to receive electrical energy transmitted by the fluid meter via the wireless link, and to be powered thereby;
• a processor component (21) arranged to acquire the control frame in the memory (23), to decrypt the control frame and extract the opening or closing command therefrom, to cause the electromechanical valve to open or close, and to write an acknowledgement frame in the memory (23);
• a symmetrical encryption key of an encryption algorithm being stored in the memory (23) of the cut-off unit (3), the processor component (21) being arranged to decrypt the control frame by using the symmetrical encryption key.

9. A cut-off unit according to claim 8, wherein the processor component (21) is to be found by default in a standby mode, and the second communication interface (20) is arranged to produce an activation signal for activating the processor component (21) when the second communication interface receives electrical energy.

10. A cut-off unit according to claim 8 or claim 9, wherein the second communication interface (20) is arranged to receive a key-change frame (50) that might be transmitted by a mobile appliance brought into the proximity of the cut-off unit, the processor component (21) being arranged to decrypt the key-change frame and to replace the symmetrical encryption key stored in the memory (23) of the cut-off unit with a new symmetrical encryption key included in the key-change frame.

11. A measurement system including a fluid meter (1) according to any one of claims 1 to 7 and a cut-off unit (3) according to any one of claims 8 to 10.

12. A transmission method for transmitting an opening or closing command to open or close an electromechanical valve (4) included in a cut-off unit (3) positioned in the proximity of a fluid meter (1), the transmission method being performed by a processor component (16) of the fluid meter according to any one of claims 1 to 7, and the method comprising the steps of:
• acquiring the opening or closing command;
• authenticating a control frame (30) including the opening or closing command;
• causing the first communication interface (15) to transmit both the control frame (30) and electrical energy to a second communication interface (20) of the cut-off unit (3) via a wireless link, the electrical energy being suitable for electrically powering the second communication interface (20) of the cut-off unit (3).

13. A transmission method according to claim 12, a symmetrical encryption key being stored in a memory (17) of the fluid meter, and the method comprising the steps of:
• acquiring a key-change frame (50) transmitted by a mobile appliance brought into the proximity of the fluid meter, the key-change frame including a new symmetrical encryption key and being encrypted using the symmetrical encryption key stored in the memory of the fluid meter;
• decrypting the key-change frame (50);
• replacing the symmetrical encryption key stored in the memory of the fluid meter with the new symmetrical encryption key.

14. A computer program including instructions that cause the processor component of the fluid meter according to any one of claims 1 to 7 to execute the steps of the transmission method according to any one of claim 12 or 13.

15. A computer readable storage medium having stored thereon the computer program according to claim 14.
